# EUROPÄISCHE PATENTSCHRIFT

(11) **EP 1 897 038 B1**
(45) Veröffentlichungstag und Bekanntmachung des Hinweises auf die Patenterteilung: **24.03.2010**
(21) Anmeldenummer: 06753950.2
(22) Anmeldetag: 29.05.2006
(51) Int. Cl.: G06K 19/07, G09G 5/00, G07D 7/00, G02F 1/167

(54) **SICHERHEITSDOKUMENT MIT INTEGRIERTEM SCHALTKREIS UND INTEGRIERTEM ANZEIGEELEMENT**
SECURITY DOCUMENT COMPRISING AN INTEGRATED CIRCUIT AND INTEGRATED DISPLAY ELEMENT
DOCUMENT DE SECURITE AYANT UN CIRCUIT INTEGRE ET UN ELEMENT D'AFFICHAGE INTEGRE

(30) Priorität: 30.06.2005 DE 102005030628
(43) Veröffentlichungstag der Anmeldung: 12.03.2008
(73) Patentinhaber: Bundesdruckerei GmbH, 10958 Berlin (DE)
(72) Erfinder: PAESCHKE, Manfred, 16352 Basdorf (DE); MUTH, Oliver, 12277 Berlin (DE); LEOPOLD, André, 10119 Berlin (DE); KUHN, Christian, 75005 Paris (FR); DRESSEL, Olaf, 14641 Wustermark (DE); PFLUGHOEFFT, Malte, 13347 Berlin (DE); HOPPE, Andreas, 12527 Berlin (DE); KUNATH, Christian, 12203 Berlin (DE); BEYER-MEKLENBURG, Günter, 16816 Neupuppin (DE); HECKER, Herrmann, 12159 Berlin (DE)
(74) Vertreter: Leske, Thomas
(86) Internationale Anmeldenummer: PCT/EP2006/005111
(87) Internationale Veröffentlichungsnummer: WO 2007/003249

(56) Entgegenhaltungen:
- WO-A-02/063602
- DE-A1- 10 035 094
- DE-A1- 10 163 266
- US-A1- 2002 174 013
- US-A1- 2003 030 926
- US-A1- 2005 045 729
- FINKENZELLER K: "RFID-Handbuch, Grundlagen und praktische Anwendungen induktiver Funkanlagen, Transponder und kontaktloser Chipkarten" RFID HANDBOOK: GRUNDLAGEN UND PRAKTISCHE ANWENDUNGEN, 1998, Seiten 155-174, XP002312699 in der Anmeldung erwähnt

## Beschreibung

Die Erfindung betrifft ein Sicherheitsdokument mit einem integrierten Schaltkreis und mit einem im Dokument integrierten Anzeigeelement gemäß den Merkmalen des Anspruchs 1.

Sicherheitsdokumente, wie Identifikationskarten, Reisepässe, Personalausweise, Führerscheine, Kreditkarten, Kunden- oder Fahrausweise und dgl., die personen- und/oder produktbezogene Daten enthalten und deshalb entsprechenden Sicherheitsanforderungen genügen müssen, werden zunehmend mit integrierten Schaltkreiskomponenten (IC) ausgestattet, in denen die personen- und/oder produktbezogene Information gespeichert ist. Im Zuge von Sicherheitsüberprüfungen wird diese Information ausgelesen und zur Authentifikation, d.h. zur Echtheitsüberprüfung des Dokuments und zur Verifikation, d.h. zur Kontrolle der Übereinstimmung mit der das Dokument vorlegenden Person herangezogen. Herkömmlich werden hierzu sowohl kontaktbehaftete als auch kontaktlose sowie Dual-Interface Chipmodule eingesetzt. Sie enthalten hoch integrierte Schaltkreise mit einem entsprechend programmierbaren Speicherelement auf Siliziumbasis. Die programmierbaren Speicherelemente sind typischerweise in der Form eines EEPROM (electrically eraseable programmable read only memory) ausgeführt. Standards und Qualitätsanforderungen für einschlägige Sicherheitsdokumente sind in der ISO 10373 festgehalten.

Abgesehen von der vorgenannten elektronischen Ausstattung werden Sicherheitsdokumente grundsätzlich grafisch gestaltet. Dabei muss die grafische Information mit der elektronischen übereinstimmen. Das elektronische und das grafische Einschreiben von personen- und/oder produktbezogenen Daten wird aus diesem Grunde bevorzugt in einer einzigen Station ausgeführt. Eine derartige Personalisierung erfordert weitgehend neutrale Dokumente, die in dieser Station u.a. grafischen Gestaltungsmethoden, wie Lasergravur, Inkjet- und digitalen Druckverfahren, Thermotransfer- oder Thermodruckverfahren und Prägevorgängen unterworfen werden.

In anderen Fällen werden bereits grafisch vorpersonalisierte Dokumente anschließend elektronisch personalisiert. Dabei muss in einem aufwändigen Verfahren absolut sichergestellt werden, dass das richtige Dokument mit der richtigen zugehörigen elektronischen Information versehen wird.

Die US 2002/ 0174013 A1 beschreibt eine Chipkarte mit einer Anzeigeeinheit und einer Speichereinheit, die von einem Lese- oder Schreibgerät über elektrische Kontakte von außen ansteuerbar sind. Der in der Chipkarte integrierte Schaltkreis zur Steuerung der angezeigten Informationen auf dem Display verfügt über mehrere Daten- und Programmspeicher, die jedoch nicht unmittelbar mit der Anzeigeeinheit verbunden sind. Eine Verwendung als Sicherheitsdokument ist nicht erwähnt.

In der DE 100 35 094 A1 ist ein tragbarer Datenträger in Form einer Chipkarte beschrieben, der eine Anzeigevorrichtung und integrierte Schaltkreise, wie einen Mikroprozessor und diesem zugeordnete Speichereinheiten enthält und der mit externen Geräten zum Lesen oder Schreiben koppelbar ist. Um den Energiebedarf der wiederaufladbaren Chipkarte gering zu halten ist vorgesehen, die Anzeigeeinheit mit einem zusätzlichen Speicher zu versehen, der unabhängig vom Mikroprozessor der Chipkarte betrieben werden kann. Zur Anzeige der Daten ist es deshalb nicht erforderlich, den Mikroprozessor in Betrieb zu setzen, sondern es genügt, nur wenige Funktionseinheiten mit Energie zu versorgen. Die Anzeigesteuereinheit wird durch einen Schalter betätigt und erlaubt es nacheinander verschiedene gespeicherte Daten zur Anzeige zu bringen. Die Anzeige lässt sich an- und ausschalten und ist mit dem Mikroprozessor über zugeordnete Speicher und Steuerungen bidirektional verbunden.

Aus der WO 02/ 063 602 ist ein elektronisches Label bekannt, das ein elektrophoretisches bistabiles Display, beispielsweise in Form einer Punktmatrix, einen Prozessor und einen Speicherbaustein enthält. Zwischen dem Prozessor und der Anzeigeeinheit besteht eine bidirektionale Verbindung, ohne dass deren Funktion erläutert wäre. Das Label ist per Funk programmierbar und kann u.a. auf einer Kreditkarte den aktuellen Guthabenstand anzeigen. Eine Verwendung auf einen Führerschein oder anderen Ausweisdokumenten ist ebenfalls denkbar.

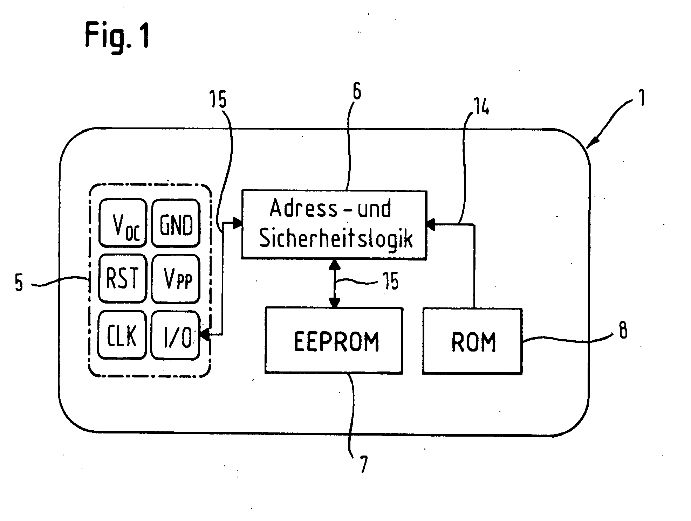

Fig. 1 zeigt die typische Architektur einer herkömmlichen Speicherkarte 1 (Klaus Finkenzeller: RFID Handbuch, Carl Hanser Verlag München, Wien 2000). Die Chipmodul-Kontaktfläche 5 ist mit sechs Kontaktflächen dargestellt, wobei V_{OC} die Versorgungsspannung, GND Ground, RST Reset, V_{PP} die Programmierspannung, CLK clock und I/O Input/Output bedeuten. Gebräuchlich sind auch Chipkarten mit acht Kontaktflächen. Symbolhaft ist der I/O-Kontakt mit einer bidirektionalen Verbindung 15 zur Adress- und Sicherheitslogik 6 eingezeichnet. Eine birektionale Verbindung besteht ebenso zwischen der Adress- und Sicherheitslogik 6 und dem EEPROM 7, während das ROM 8 unidirektional über Verbindung 14 mit der Adress- und Sicherheitslogik 6 verbunden ist.

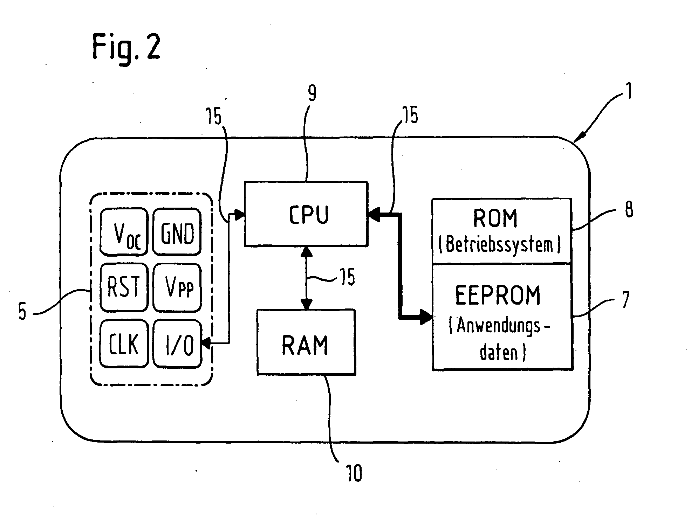

Fig. 2 zeigt die Rechnerarchitektur einer herkömmlichen Mikroprozessorkarte 1 (Klaus Finkenzeller: RFID Handbuch, Carl Hanser Verlag München, Wien 2000). Die Verbindungen zwischen dem I/O-Kontakt und der CPU 9, zwischen CPU 9 und RAM 10 sowie zwischen CPU 9 und der zusammengefassten Einheit aus EEPROM 7 und ROM 8 sind jeweils bidirektional, wobei natürlich das ROM 8 selbst intern wieder unidirektional angesteuert wird.

Der vorliegenden Erfindung liegt die Aufgabe zugrunde, die Technologie der Sicherheitsdokumente weiter zu verbessern.

Erfindungsgemäß wird das gesetzte Ziel durch ein Sicherheitsdokument gemäß Anspruch 1 erreicht.

Die abhängigen Ansprüche definieren bevorzugte Ausführungsformen der Erfindung.

Der Erfindung liegt dabei die Erkenntnis zugrunde, dass ein elektronisches Anzeigefeld mit einer bidirektionalen Treiberelektronik neben der visuellen Darstellung gleichzeitig als programmierbarer Speicher für das IC-Element verwendet werden kann. Der Speicher im IC der Chipkarte, üblicherweise eine EEPROM kann auf diese Weise je nach Anwendungsfall gänzlich entfallen oder zumindest teilweise durch das elektronische Anzeigefeld ersetzt werden. In gleicher Weise kann das Anzeigefeld gegebenenfalls auch als ein zumindest teilweiser Ersatz für ein ROM oder EPROM verwendet werden.

Von Vorteil ist, dass das Anzeigeelement ausschließlich über den integrierten Schaltkreis programmierbar und derart personalisierbar ist, wobei unter Personalisierung die dokumentenbezogene Individualisierung verstanden wird. Hierbei werden vorzugsweise biometrische Informationen des Dokumenteninhabers, wie Gesichtsbild, Fingerabdrücke, Uriterschriftsprobe, aber auch Name, Geburtsdatum usw. eingeschrieben.

Das Anzeigeelement nach der Erfindung ist bistabil ausgeführt, so dass es im stromlosen Zustand seine Information behält. Derartige Anzeigen sind vorzugsweise als elektrophoretische, ferroelektrische oder cholesterische Flüssigkristall-Anzeigen ausgebildet. Das Anzeigeelement kann auch durch ein passives oder aktives, selbstleuchtendes Anzeigesystem auf der Basis von OLED-Elementen gebildet werden. Im Falle von aktiven OLED-Elementen wird die Anzeige unter Zuhilfenahme eines Lesegeräts oder über eine eingebaute Energiequelle aktiviert, wodurch die Darstellung dann visuell erkennbar wird.

Der integrierte Schaltkreis ist vorzugsweise in einem Chipmodul enthalten, der im Dokument so angebracht ist, dass er nicht ohne Zerstörung daraus entfernt werden kann. Das Anzeigeelement wird dann über Außenkontakte des wird in eine ausgefräste Kavität des Dokuments eingesetzt, wobei der Fräsarbeitsgang so geführt wird, dass dabei auch die innenliegenden Anschlüsse freigelegt werden.

In der Ausführung als kontaktlose Chipkarte kann die Programmierung gegebenenfalls mit erhöhter RFID-Feldstärken erfolgen, wenn der Vorgang in geschlossener Umgebung unter entsprechender Abschirmung erfolgt. Hierzu können induktiv oder kapazitiv wirkende Kopplungsfelder im Dokument vorgesehen sein, über die jeweils die erhöhte Energie eingebracht wird. Nach erfolgter Programmierung kann ein irreversibler Vorgang ausgelöst werden, der bspw. ein innenliegendes Verdrahtungselement hochohmig macht, unterbricht oder einen Kurzschluss verursacht, so dass eine nochmalige Programmierung und eine Änderung der eingeschriebenen Daten nicht mehr möglich ist.

Das Anzeige- bzw. Speichersystem ist nach Zeilen und Spalten organisiert, die elektrisch angesteuert werden. Hierfür werden Treiber-Schaltkreise benötigt. Da das Anzeigefeld als eine Art EEPROM betrachtet werden kann, wobei die Speicherpunkte die visuell erkennbaren Pixel sind, wird der Treiber erfindungsgemäß bidirektional ausgeführt. Bei Verwendung von bistabilen Anzeigeelementen kann der Treiber nach erfolgter Programmierung irreversibel verändert werden, so dass nur ein Lesen der eingeschriebenen Information möglich ist. Das Anzeigeelement fungiert danach sozusagen nur noch als ROM.

Der Personalisierungsvorgang kann auch durch Beaufschlagung mit einem Laserimpuls oder mit lokal wirkenden elektrischen und magnetischen Feldern oder bspw. durch Auspolymerisieren vorbestimmter Elemente irreversibel festgeschrieben werden.

Üblicherweise werden die genannten Treiber in unmittelbarer Nachbarschaft zu den Zeilen- und Spaltenleitungen des Anzeigefeldes angeordnet, um keine langen Wegstrecken überbrücken zu müssen. Der Anzeigentreiber-IC kann aber auch als zusätzlicher integrierter Schaltkreis im Chipmodul untergebracht sein. Vorzugsweise ist er im IC des Chipmoduls selbst ausgebildet. Grundsätzlich ist es auch möglich die Anzeige über einen im Lese-/Schreibgerät befindlichen Anzeigentreiber-IC zu betreiben.

Für das Anzeigefeld können bidirektionale Matrixtreiber ICs in Flip-Chip Technik verwendet werden. Dabei werden relativ feine Verdrahtungsleitungen zur Kontaktierung der IC-Pads benötigt. Hierfür können ätztechnische Feinstleitertechniken mit Leiterbahnabständen im Bereich von 10 µm bis 30 µm aber auch spezielle Drucktechniken, bspw. nach dem Ink-Jet Verfahren zum Einsatz kommen.

Die serielle bidirektionale Ansteuerung des Anzeigeelements erfolgt vorzugsweise seriell über zwei oder drei elektrische Verbindungen. Die Zeilen- und Spaltenleitungen sind dabei mit Kapazitäten und gegebenenfalls mit weiteren elektronischen Funktionen, wie Diodenfunktionen ausgestattet. Die serielle bidirektionale Verbindung weist dabei eine Signalleitung und zwei Spannungsversorgungsleitungen auf, die direkt mit einem Kontaktchipmodul oder einem Dualinterface analog zur Kontaktierung von Antennen verbunden werden können.

Es stehen somit grundsätzlich mehrere Möglichkeiten zu Auswahl:
In einer einfachen Ausführungsform wird das Anzeigeelement über ein kontaktbehaftetes Lesemodul beschrieben. Dazu müssen lediglich die innenliegenden seriellen Steuerleitungen über korrespondierende Chipmodul-Kontaktflächen nach außen geführt werden. In dieser einfachen Ausführung kann ein geringfügig adaptiertes Chipmodul verwendet und die gesamte Ansteuerelektronik im Lese-/Schreibgerät ausgebildet werden.

In der Ausführungsform eines Dual-Interface Dokuments werden zusätzlich die beiden Antennenkontakte angeschlossen.

Als kontaktlos funktionierendes Dokument, bei dem keine externen ohmschen Verbindungen zur Verfügung stehen, muss der gesamte Vorgang der Selbstpersonalisierung, also des Einschreibens der Personen- und/oder produktbezogenen Daten in die grafische Anzeige, ausschließlich über die drahtlose Schnittstelle erfolgen. Hierzu kann es notwendig sein das Dokument mit erhöhter Energie zu beaufschlagen, wobei geeignete Abschirmungen als Schutz eingesetzt werden. Zur Energie- und Informationskopplung kann auch eine lochartige Ausnehmung im Dokument vorgesehen sein, um die eine Spule angeordnet ist. Die Kopplung erfolgt dann über einen in die lochartige Ausnehmung greifenden Induktionskern.

Das Anzeigefeld wird bevorzugt mit biometrischen Daten des Dokumenteninhabers, wie dem Gesichtsbild, Fingerabdrücken und dgl. beschrieben. Die visuelle Darstellung im Anzeigefeld enthält dabei bevorzugt steganographisch versteckte Information, die ein zusätzliches Sicherheitsmerkmal darstellt, das Missbrauch und Manipulationsversuche weiter erschwert.

Je nach Einsatzgebiet des Sicherheitsdokuments muss das Einschreiben und/oder Verändern der Anzeige des Anzeigesystems unter aufwändigen sicherheitstechnischen Auflagen erfolgen. Derartige, insbesondere kryptographische Methoden, kontrollierte Zugangsberechtigungen, PIN Nummern und dgl. sind im Bereich von Speicher- und Chipkarten üblich. Die diesbezüglich für RFID-Systeme vorgesehene Sicherheitsstruktur des Chipmoduls wird dabei für bewusste legale Änderung des Anzeigeinhalts mitverwendet. Auf diese Weise ist es möglich, den Sicherheitsstandard, wie er herkömmlich für Chipkarten gegeben ist, auch für die Sicherheitsdokumente nach der Erfindung zumindest aufrecht zu erhalten.

Ein besonderer Vorteil liegt darin, dass das Anzeigeelement in einem nicht auftrennbaren Laminatverbund des Dokuments drucktechnisch integriert ist. Es können dabei zwei Verdrahtungsebenen in Form von Zeilen- und Spaltenleitungen vorgesehen sein, wobei diese Ebenen innenliegend mit korrespondierenden Kontakten des Chipmoduls verbunden sind. In vorteilhafter Weiterbildung weist das Anzeigesystem auch noch eine dritte Verdrahtungsebene in Form einer transparenten Deckelektrode auf, die ebenfalls innenliegend mit korrespondierenden Kontakten des Chipmoduls verbunden ist. In Ausführung der Erfindung können herkömmliche Verdrahtungstechniken aus der flexiblen Leiterplattenherstellung ebenso wie Polymerelektronik und Verfahren zur drucktechnischen Herstellung elektronischer Schaltungen verwendet werden.

Das erfindungsgemäße Sicherheitsdokument wird in Laminationstechnik als Verbund aus einer Mehrzahl von Folien und/oder flexiblen Leiterplatten hergestellt. Unter flexiblen Leiterplatten werden die aus dem Stand der Technik bekannten löttemperaturbeständigen Kunststofffolien wie bspw. Polyimid (PI), Polyethersulfon (PES) oder Polyetheretherketon (PEEK) sowie gewebte (z.B. FR-4) bzw. nicht-gewebte Substrate (z.B. Aramid = Aromatische Polyamide) verstanden. Diese werden mit einer dünnen Kupferfolie versehen und in Subtrativtechnik mittels Ätzen strukturiert. Mit dieser Technik können auch zweiseitige oder mehrlagige flexible Leiterplatten mit entsprechenden Durchkontaktierungen hergestellt werden. Falls nur eine eingeschränkte Lötbeständigkeit erforderlich ist, können auch Polyesterfolien (PET) in Subtraktivtechnik, also mit geätzter Kupfer- oder Aluminiumfolie verwendet werden. Es können darüber hinaus alle genannten Substrate auch mit der sogenannten Additivtechnik, also bspw. mittels Silber-, Kupfer- oder Carbonpastendruck mit elektrischen Verdrahtungsstrukturen versehen werden. Diese Strukturen werden mittels isotroper oder anisotroper Leitkleber elektrisch kontaktiert. Die elektrische Verbindung kann auch durch einen Crimpvorgang, mittels Ultraschall oder einer ähnlichen Druck-TemperaturEinwirkung, insbesondere zur Erzeugung einer intermetallischen leitenden Verbindung hergestellt werden.

Neben diesen weitgehend konventionellen Lösungen kann mittels sogenannter Polymerelektronik, eine Integration von elektrischen Bauelementen in drucktechnischer Art realisiert werden. Wenngleich hierfür auch eine parallele Treiberlogik möglich ist, wird in Ausführungsformen der vorliegenden Erfindung eine serielle Ansteuerung der Anzeigefelder bzw. der Speicherelemente bevorzugt.

Zum Schutz gegen direkte Manipulationsversuche des Anzeigefeldes wird dieses in einen Faradaykäfig eingebaut. Bspw. kann rückseitig im Dokument eine dünne, flächig oder rasterförmig aufgebaute elektrisch leitfähige Struktur in Form einer Carbon- oder nanotube-haltigen Paste, einer Silberpaste, einer ITO(Indium-Tin-Oxide)-Paste oder einer intrinsisch leitfähigen Polymerschicht vorgesehen sein, während auf der Vorderseite eine transparente metalloxidische Paste oder eine leitfähige Polymerfolie verwendet wird.

Die neben dem elektronischen Anzeigefeld in üblicher Weise vorgesehene grafische Information kann mit bekannten Druckverfahren und in Hochprägetechnik aufgebracht werden.

Bei dem erfindungsgemäßen Dokument ist gegebenenfalls auch eine Energieversorgungsquelle in Form eines Solarmoduls, einer wiederaufladbaren Batterie oder einer Piezo-Energiequelle vorgesehen. Die Energiequelle ist dabei über einen Taster aktivierbar. Auf diese Weise lassen sich auch selbstleuchtende Anzeigen in Sicherheitsdokumenten realisieren, die nur im Bedarfsfall eingeschaltet werden.

Der Vorgang der Personalisierung kann unter Einbau weiterer Sicherheitskriterien davon abhängig gemacht werden, dass er nur unter bestimmten Umgebungsparametern, bspw. unter Beaufschlagung mit elektromagnetischer Bestrahlung in einem bestimmten Wellenlängenbereich oder unter Anwendung magnetischer Felder oder Laserbelichtung ablaufen kann. Des weiteren können durch derartige Effekte insbesondere durch den Einsatz eines spezifischen Laserstrahlimpulses einzelne Elemente eines Anzeigenfeldes programmiert oder irreversibel beeinflusst werden.

Mit der Erfindung lassen sich somit Anzeigesysteme auf elektronisch unterstützen Dokumenten in drucktechnischer, und damit dünner biegeweicher Ausbildung mit hohem Kontrast, geringen Herstellungskosten und hoher Fälschungssicherheit herstellen.

Weitere Merkmale und Vorteile der Erfindung ergeben sich aus der nachfolgenden Beschreibung von Ausführungsbeispielen.

Es zeigen:
- Fig. 3.:: Ein erstes Ausführungsbeispiel eines erfindungsgemäßen Sicherheitsdokuments;
- Fig. 4.:: Ein Ausführungsbeispiel mit einem DUAL-Interface Chipmodul;
- Fig. 5:: Ein Ausführungsbeispiel in Form eines Reisepasses mit einer im Dokument enthaltenen Dipolantenne.

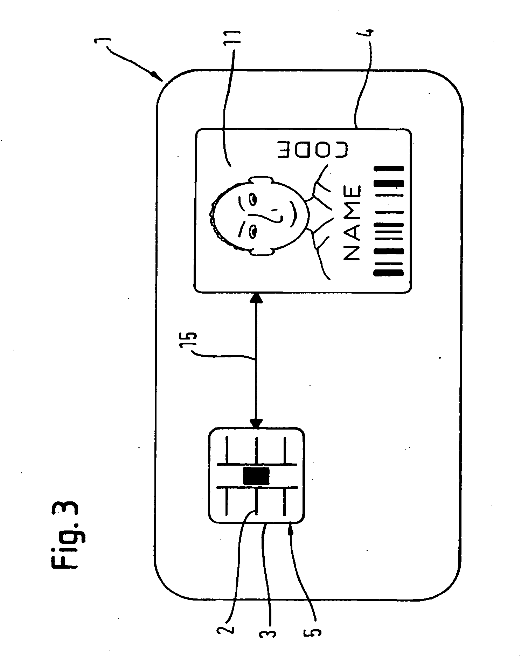

In Fig. 3 ist schematisch ein Sicherheitsdokument 1 nach der Erfindung in Form einer Identitätskarte mit einem kontaktbehafteten oder kontaktlos ansteuerbaren Chipmodul 3 auf der Kontaktfläche 5 dargestellt. Das Sicherheitsdokument 1 enthält zumindest ein elektronisches Anzeigefeld 4 in Gestalt eines bistabil einstellbaren cholesterischen Flüssigkristalldisplays, das als Anzeigeinformation 11 das Gesichtsbild des Dokumenteninhabers wiedergibt. Mit dem integrierten Schaltkreis 2 des Chipmoduls 3 ist das elektronische Anzeigefeld 4 über die bidirektionale Verbindung 15 verbunden. Für die bloße Anzeige ist an sich nur eine unidirektionale Ansteuerung erforderlich. Weil das Anzeigefeld hier aber gleichzeitig als Speicherfeld verwendet wird, muss sein Inhalt zugleich auch auslesbar sein.

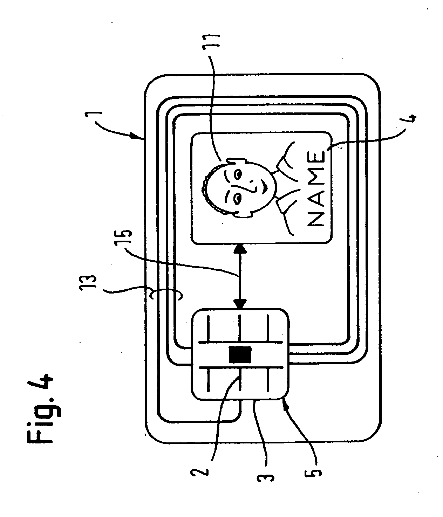

Fig. 4 zeigt schematisch eine erfindungsgemäße Identitätskarte 1 mit einem Dual-Interface Chipmodul 3 auf der Chipmodulkontaktfläche 5. Das Dokument 1 enthält eine RFID Antenne in Form einer Spule 13, über die der integrierte Schaltkreis 2 mit einem externen Lese-/Schreibgerät kommunizieren kann. Das Dokument 1 enthält wiederum zumindest ein elektronisches Anzeigefeld 4 mit einem Gesichtsbild 11 oder anderen biometrischen Daten des Dokumenteninhabers. Das Anzeigefeld ist wie zuvor beschrieben zusätzlich als über den IC 2 auslesbarer Speicher konzipiert und deshalb über die bidirektionale Leitung 15 mit dem IC verbunden.

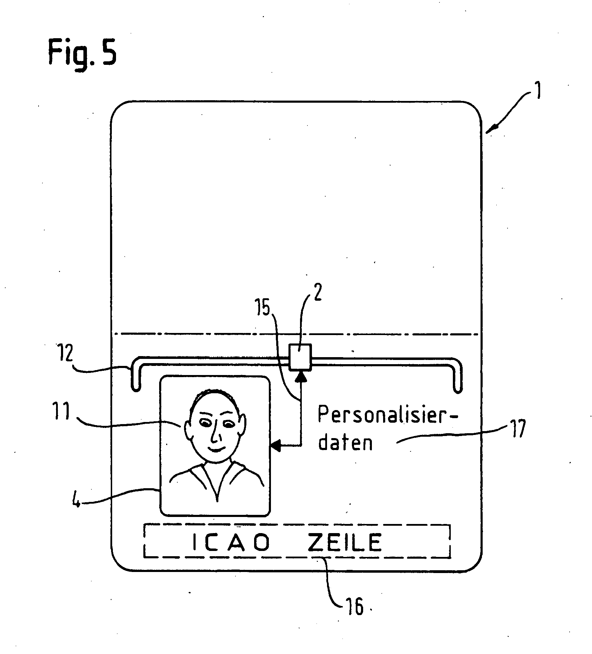

Fig. 5 zeigt am Beispiel eines Reisepasses 1 dessen Personalisierseite mit dem Anzeigefeld 4, der ICAO-Zeile 16 und den Personalisierdaten 17. Der IC 2 kann über die als Dipol 12 ausgebildete Antenne mit einem externen Lese-/Schreibgerät kommunizieren und benützt das Anzeigefeld 4 über die bidirektionale Verbindung 15 als EEPROM-Ersatz. Als Anzeigeinhalte 11 des Anzeigefeldes 4 werden insbesondere biometrische Daten des Dokumenteninhabers angezeigt.

### Bezugszeichen

- 1: Dokument
- 2: integrierter Schaltkreis (IC)
- 3: Chipmodul
- 4: Anzeigeelement-Speicherelement
- 5: Chipmodul-Kontaktfläche, Kontaktflächenbelegung
- 6: Adress- und Sicherheitslogik
- 7: EEPROM
- 8: ROM
- 9: CPU
- 10: RAM
- 11: Anzeigeinformation
- 12: Dipolantenne
- 13: Antennenspule
- 14: unidirektionale Verbindung
- 15: bidirektionale Verbindung
- 16: ICAO-Zeile (International Civil Aviation Organization)
- 17: Personalisierdaten

## Patentansprüche

1. Sicherheitsdokument (1)
mit einem integrierten Schaltkreis (2) zur Kommunikation mit einem externen Lese- und/oder Schreibgerät
und mit mindestens einem in das Sicherheitsdokument (1) integrierten Anzeigeelement (4) zur visuellen Darstellung personen- und/oder produktbezogener Daten,
**dadurch gekennzeichnet, dass**
das Anzeigeelement (4) bistabil einstellbar ist und bidirektional mit dem integrierten Schaltkreis (2) verbunden ist
und derart vom integrierten Schaltkreis (2) sowohl als programmierbares als auch als auslesbares Speicherfeld nutzbar ist.

2. Sicherheitsdokument nach Anspruch 1, wobei das Anzeigeelement (4) nur über den integrierten Schaltkreis (2) programmierbar und derart das Sicherheitsdokument (1) selbstpersonalisierbar ist.

3. Sicherheitsdokument nach Anspruch 1 oder 2, wobei das Anzeigeelement (4) als elektrophoretisches Anzeigesystem ausgebildet ist.

4. Sicherheitsdokument nach Anspruch 1 oder 2, wobei das Anzeigeelement (4) als ferroelektrisches Anzeigesystem ausgebildet ist.

5. Sicherheitsdokument nach Anspruch 1 oder 2, wobei das Anzeigeelement (4) als bistabiles cholesterisches Flüssigkristall-Anzeigesystem ausgebildet ist.

6. Sicherheitsdokument nach Anspruch 1 oder 2, wobei das Anzeigeelement (4) als OLED Anzeigesystem ausgebildet ist.

7. Sicherheitsdokument nach Anspruch 6, wobei das Anzeigeelement (4) als aktiv leuchtendes Anzeigesystem ausgebildet ist.

8. Sicherheitsdokument nach einem der Ansprüche 1 bis 7, wobei der integrierte Schaltkreis (2) in einem Chipmodul (3) des Dokuments (1) enthalten ist.

9. Sicherheitsdokument nach Anspruch 8, wobei das Anzeigeelement (4) über Außenkontakte des Chipmoduls (3) beschreibbar ist.

10. Sicherheitsdokument nach Anspruch 8 oder 9, wobei das Anzeigeelement (4) kontaktlos über das Chipmodul (3) beschreibbar ist.

11. Sicherheitsdokument nach einem der Ansprüche 1 bis 10, wobei der integrierte Schaltkreis (2) einen bidirektionalen Anzeigentreiber enthält.

12. Sicherheitsdokument nach Anspruch 11, wobei der Anzeigentreiber in Form eines Anzeigentreiber-ICs im Chipmodul (3) enthalten ist.

13. Sicherheitsdokument nach Anspruch 11, wobei der Anzeigentreiber im IC des Chipmoduls (3) ausgebildet ist.

14. Sicherheitsdokument nach einem der Ansprüche 1 bis 13, wobei das Anzeigeelement (4) seriell über zwei oder drei elektrische Verbindungen (14, 15) mit Information versorgbar ist.

15. Sicherheitsdokument nach einem der Ansprüche 1 bis 14, wobei das Anzeigeelement. (4) Zeilen- und Spaltenleitungen aufweist, die mit Kondensatoren für eine serielle Datenversorgung ausgestattet sind.

16. Sicherheitsdokument nach einem der Ansprüche 1 bis 15, wobei das Anzeigefeld (4) mit biometrischen Daten des Dokumenteninhabers beschreibbar ist.

17. Sicherheitsdokument nach einem der Ansprüche 1 bis 16, wobei das Einschreiben und/oder Verändern der Anzeige des Anzeigesystems durch sicherheitstechnische Maßnahmen, insbesondere kryptographische Methoden abgesichert ist.

18. Sicherheitsdokument nach einem der Ansprüche 1 bis 17, wobei das Anzeigeelement (4) in einem Laminatverbund des Dokuments (1) drucktechnisch integriert ist.

19. Sicherheitsdokument nach Anspruch 18, wobei das Laminat Folien und/oder flexible Leiterplatten umfasst.

20. Sicherheitsdokument nach einem der Ansprüche 1 bis 19, wobei das Anzeigesystem (4) zwei Verdrahtungsebenen in Form von Zeilen- und Spaltenleitungen aufweist und diese Ebenen innenliegend mit korrespondierenden Kontakten (5) des Chipmoduls (3) verbunden sind.

21. Sicherheitsdokument nach einem der Ansprüche 1 bis 20, wobei das Anzeigeelement (4) drei Verdrahtungsebenen in Form von Zeilen- und Spaltenleitungen und einer transparenten Deckelektrode aufweist und diese Ebenen innenliegend mit korrespondierenden Kontakten (5) des Chipmoduls (3) verbunden sind.

22. Sicherheitsdokument nach einem der Ansprüche 1 bis 21, wobei der integrierte Schaltkreis (2) in einem Chipmodul (3) enthalten ist, der in eine ausgefräste Kavität des Dokuments (1) eingesetzt ist.

23. Sicherheitsdokument nach einem der Ansprüche 1 bis 22, wobei die visuelle Darstellung im Anzeigeelement (4) steganographisch versteckte Information enthält.

## Claims

1. A security document (1) comprising an integrated circuit (2) for communication with an external reading and/or writing device, and comprising at least one display element (4) which is integrated into the security document (1) and serves for visually representing personal and/or product-related data, wherein the display element (4) bistably settable and is connected bidirectionally with the integrated circuit (2) and is thereby usable by the integrated circuit (2) as a programmable as well as a readable memory array.

2. The security document as claimed in claim 1, wherein the display element (4) is programmable only by means of the integrated circuit (2) and the security document (1) is self-personalizable in this way.

3. The security document as claimed in claim 1 or 2, wherein the display element (4) is formed as an electrophoretic display system.

4. The security document as claimed in claim 1 or 2, wherein the display element (4) is formed as an ferroelectric display system.

5. The security document as claimed in claim 1 or 2, wherein the display element (4) is formed as a bistable cholesteric liquid crystal display system.

6. The security document as claimed in claim 1 or 2, wherein the display element (4) is formed as an OLED display system.

7. The security document as claimed in claim 6, wherein the display element (4) is formed as an actively luminous display system.

8. The security document as claimed in one of claims 1 to 7, wherein the integrated circuit (2) is contained in a chip module (3) of the document (1).

9. The security document as claimed in claim 8, wherein the display element (4) can be written to via external contacts of the chip module (3).

10. The security document as claimed in claim 8 or 9, wherein the display element (4) can be written to contactlessly via the chip module (3).

11. The security document as claimed in one of claims 1 to 10, wherein the integrated circuit (2) contains a bidirectional display driver.

12. The security document as claimed in claim 11, wherein the display driver is contained in the form of a display driver IC in the chip module (3).

13. The security document as claimed in claim 11, wherein the display driver is formed in the IC of the chip module (3).

14. The security document as claimed in one of claims 1 to 13, wherein the display element (4) can be supplied with information serially via two or three electrical connections (14, 15).

15. The security document as claimed in one of claims 1 to 14, wherein the display element (4) has row and column lines equipped with capacitors for a serial data supply.

16. The security document as claimed in one of claims 1 to 15, wherein biometric data of the owner of the document are written to the display element (4).

17. The security document as claimed in one of claims 1 to 16, wherein the writing to and/or altering of the display of the display system is safeguarded by security-technological measures, in particular cryptographic methods.

18. The security document as claimed in one of claims 1 to 17, wherein the display element (4) is integrated in a laminate composite of the document (1) by printing technology.

19. The security document as claimed in claim 18, wherein the laminate comprises films and/or flexible printed circuit boards.

20. The security document as claimed in one of claims 1 to 19, wherein the display element (4) has two wiring planes in the form of row and column lines and said planes are connected internally to corresponding contacts (5) of the chip module (3).

21. The security document as claimed in one of claims 1 to 20, wherein the display element (4) has three wiring planes in the form of row and column lines and a transparent top electrode and said planes are connected internally to corresponding contacts (5) of the chip module (3).

22. The security document as claimed in one of claims 1 to 21, wherein the integrated circuit (2) is contained in a chip module (3) that is inserted into a milled-out cavity of the document (1).

23. The security document as claimed in one of claims 1 to 22, wherein the visual representation in the display element (4) contains steganographically concealed information.

## Revendications

1. Document de sécurité (1) comprenant un circuit intégré (2) pour communiquer avec un appareil de lecture et/ou d'écriture externe et comprenant au moins un élément indicateur (4) intégré dans le document de sécurité (1) pour la représentation visuelle de données personnelles et/ou en rapport avec un produit, **caractérisé en ce que** l'élément indicateur (4) peut être réglé de manière bistable et qu'il est relié de manière bidirectionnelle avec le circuit intégré (2) et peut ainsi être utilisé par le circuit intégré (2) en tant que zone de mémoire aussi bien programmable que lisible.

2. Document de sécurité selon la revendication 1, l'élément indicateur (4) ne pouvant être programmé que par le biais du circuit intégré (2) et le document de sécurité (1) étant ainsi personnalisable par soi-même.

3. Document de sécurité selon la revendication 1 ou 2, l'élément indicateur (4) étant réalisé sous la forme d'un système indicateur électrophorétique.

4. Document de sécurité selon la revendication 1 ou 2, l'élément indicateur (4) étant réalisé sous la forme d'un système indicateur ferroélectrique.

5. Document de sécurité selon la revendication 1 ou 2, l'élément indicateur (4) étant réalisé sous la forme d'un système indicateur à cristaux liquides cholestérique bistable.

6. Document de sécurité selon la revendication 1 ou 2, l'élément indicateur (4) étant réalisé sous la forme d'un système indicateur à OLED.

7. Document de sécurité selon la revendication 6, l'élément indicateur (4) étant réalisé sous la forme d'un système indicateur luminescent actif.

8. Document de sécurité selon l'une des revendications 1 à 7, le circuit intégré (2) se trouvant dans un module à puce (3) du document (1).

9. Document de sécurité selon la revendication 8, l'élément indicateur (4) pouvant être programmé par le biais de contacts extérieurs du module à puce (3).

10. Document de sécurité selon la revendication 8 ou 9, l'élément indicateur (4) pouvant être programmé sans contact par le biais du module à puce (3).

11. Document de sécurité selon l'une des revendications 1 à 10, le circuit intégré (2) contenant un circuit de commande d'affichage bidirectionnel.

12. Document de sécurité selon la revendication 11, le circuit de commande d'affichage étant contenu dans le module à puce (3) sous la forme d'un CI de commande d'affichage.

13. Document de sécurité selon la revendication 11, le circuit de commande d'affichage étant réalisé dans le CI du module à puce (3).

14. Document de sécurité selon l'une des revendications 1 à 13, l'élément indicateur (4) pouvant être alimenté en informations en série par le biais de deux ou trois liaisons électriques (14, 15).

15. Document de sécurité selon l'une des revendications 1 à 14, l'élément indicateur (4) présentant des conducteurs de lignes et de colonnes qui sont équipés de condensateurs pour une alimentation en série des données.

16. Document de sécurité selon l'une des revendications 1 à 15, le champ d'indication (4) pouvant être programmé avec les données biométriques du possesseur du document.

17. Document de sécurité selon l'une des revendications 1 à 16, l'écriture et/ou la modification de l'indication du système indicateur étant protégée par des mesures techniques de sécurité, notamment des méthodes cryptographiques.

18. Document de sécurité selon l'une des revendications 1 à 17, l'élément indicateur (4) étant intégré par technique d'impression dans un composé stratifié du document (1).

19. Document de sécurité selon la revendication 18, le stratifié comprenant des films et/ou des circuits imprimés souples.

20. Document de sécurité selon l'une des revendications 1 à 19, le système indicateur (4) présentant deux plans de câblage sous la forme de conducteurs de lignes et de colonnes et ces plans étant reliés intérieurement avec les contacts (5) correspondants du module à puce (3).

21. Document de sécurité selon l'une des revendications 1 à 20, l'élément indicateur (4) présentant trois plans de câblage sous la forme de conducteurs de lignes et de colonnes et d'une électrode de recouvrement transparente et ces plans étant reliés intérieurement avec les contacts (5) correspondants du module à puce (3).

22. Document de sécurité selon l'une des revendications 1 à 21, le circuit intégré (2) se trouvant dans un module à puce (3) qui est inséré dans une cavité creusée par fraisage du document (1).

23. Document de sécurité selon l'une des revendications 1 à 22, la représentation visuelle dans l'élément indicateur (4) contenant des informations masquées par stéganographie.
